# FASCICULE DE BREVET EUROPEEN

(11) **EP 2 059 703 B1**
(45) Date de publication et mention de la délivrance du brevet: **26.09.2012**
(21) Numéro de dépôt: 07823421.8
(22) Date de dépôt: 13.08.2007
(51) Int. Cl.: F16L 11/16

(54) **CONDUITE FLEXIBLE DE TRANSPORT D'HYDROCARBURES COMPORTANT UNE CARCASSE DE CONDUITE TUBULAIRE EN FEUILLARD AGRAFÉ**
FLEXIBLE LEITUNG ZUR FÖRDERUNG VON KOHLENWASSERSTOFFEN MIT EINEM RÖHRENLEITUNGSRAHMEN AUS KLEMMRINGEISEN
FLEXIBLE DUCT FOR CONVEYING HYDROCARBONS COMPRISING A TUBULAR DUCT FRAME OF CLAMPED HOOP IRON

(30) Priorité: 30.08.2006 FR 0607620
(43) Date de publication de la demande: 20.05.2009
(73) Titulaire: Technip France, 92400 Courbevoie (FR)
(72) Inventeur: JUNG, Patrice, Joël, Louis, 76940 La Mailleraye sur Seine (FR); SECHER, Philippe, 76250 Deville Les Rouen (FR)
(74) Mandataire: Bertrand, Didier
(86) Numéro de dépôt international: PCT/FR2007/001369
(87) Numéro de publication internationale: WO 2008/025893

(56) Documents cités:
- EP-A1- 0 527 413
- WO-A-03/036152
- FR-A- 420 842
- FR-A- 465 136
- FR-A- 1 367 139

## Description

L'invention concerne une conduite tubulaire flexible pour le transport d'hydrocarbures, du type comportant, radialement disposées de l'intérieur vers l'extérieur, une carcasse, une gaine de pression interne et une ou plusieurs nappes d'armure, la carcasse étant constituée par l'enroulement en spires agrafées d'un élément allongé profilé de type feuillard.

Une telle conduite est appelée couramment "rough bore" (à passage non-lisse) parce que la carcasse qui constitue la couche intérieure de la conduite comporte des discontinuités apparentes au niveau des déjoints séparant les spires, au contraire des conduites dites "smooth bore" (à passage lisse) dans lesquelles la couche la plus interne de la conduite est formée par une gaine intérieure couvrant intérieurement la voûte.

Une telle conduite peut éventuellement comprendre, en plus des couches mentionnées, d'autres couches particulières, comme une voûte de pression, une frette, des gaines intermédiaires, une gaine de protection externe, etc.

La carcasse est, comme le rappellent les recommandations API 17J de l'American Petroleum Institute, une couche tubulaire, en principe interne, formée d'un enroulement métallique agrafé et destinée essentiellement à empêcher l'écrasement ou l'effondrement ("collapse") de la gaine d'étanchéité interne ou de la conduite en l'absence de pression interne dans la conduite, sous l'effet de la pression externe, de la pression engendrée par les armures de traction, voire des charges mécaniques extérieures (notamment lors de la pose, dans les organes de préhension).

La carcasse est réalisée le plus traditionnellement en feuillard résistant à la corrosion, profilé généralement selon une forme en section voisine d'un S couché et enroulé de manière à réaliser des spires agrafées les unes aux autres. Afin d'améliorer les performances d'une carcasse, diverses propositions ont déjà été faites. On pourra se reporter ainsi au document EP 0 429 357 de la Demanderesse, montrant une carcasse dont le feuillard constitutif comprend une onde formant une structure d'appui qui augmente la hauteur de la section et donc l'inertie, améliorant la résistance à l'écrasement de la carcasse.

Bien que cette solution paraisse simple à mettre en oeuvre, il apparaît en pratique que le formage précis de l'onde est une opération difficile. La formation de l'onde en bordure de la bande de feuillard nécessite des efforts importants au niveau de la profileuse ; il arrive que le feuillard chasse sous ces efforts, ce qui a pour conséquence le déséquilibre de la géométrie du profilé avec des incidences sur les pas et l'inertie du profilé agrafé. Ces incidences peuvent dégrader la résistance de la carcasse à l'écrasement.

La Demanderesse a également proposé pour certaines applications, dans le document WO 03/036152 qui sert de base au préamble de ma revendication 1 annexée, une carcasse constituée par un enroulement d'au moins un élément allongé métallique à forte section résistant à la corrosion et agrafé par un feuillard mince résistant à la corrosion.

L'invention a pour but de proposer une nouvelle structure de carcasse pour conduite d'exploitation pétrolière ne comportant pas l'onde mentionnée plus haut mais offrant néanmoins de bonnes performances, notamment en matière de résistance à l'écrasement.

Ce but est atteint selon l'invention grâce à une conduite tubulaire flexible de transport d'hydrocarbures, telle que definie dans la revendication 1 annexée. . Ainsi le profilé d'entretoise coopère de manière efficace avec le feuillard pour assurer un écartement garanti entre les parois d'intrados et d'extrados des spires, s'opposant à leur écrasement. En revanche, du fait de la relative souplesse du profilé d'entretoise dans le sens longitudinal de l'enroulement, il ne s'oppose pas de manière absolue à un rapprochement des spires entre elles, lors d'un cintrage par exemple, même s'il amortit quelque peu ce déplacement. La souplesse de la carcasse (et donc de la conduite qui l'incorpore) n'est donc pas compromise par la présence du profilé d'entretoise.

Le fait qu'il s'agisse d'une pièce distincte du feuillard lui-même simplifie la fabrication du feuillard en supprimant l'étape de profilage de l'onde du feuillard. La pièce de profilé d'entretoise peut elle-même être relativement simple et elle s'incorpore dans la carcasse au moment de la réalisation de celle-ci, au niveau de la spiraleuse.

Avantageusement, la dimension hors tout du profilé d'entretoise dans le sens radial est sensiblement égale à l'écartement entre les parois d'intrados et d'extrados de l'enroulement, de sorte que l'entretoise cale exactement les parois d'intrados et d'extrados à leur écartement nominal.

Avantageusement, la dimension hors tout du profilé d'entretoise dans le sens longitudinal de l'enroulement est sensiblement égale à l'écartement moyen entre les parois latérales des spires lorsqu'elles sont enroulées à leur pas moyen. De la sorte, l'effet d'amortissement du déplacement ne se fait sentir qu'à partir d'un pas inférieur au pas moyen.

Avantageusement, le profilé comporte au moins un élément radialement non compressible formant la hauteur du profilé dans le sens radial de l'enroulement. Cet élément non compressible peut être continu, sous forme d'un ou de plusieurs éléments allongés enroulés, ou discontinu, sous forme d'une pluralité de tronçons ou de plots. C'est cet élément radialement non compressible qui confère au profilé son absence de capacité à l'écrasement dans le sens radial de l'enroulement. Avantageusement, cet élément non compressible est en métal, de préférence en acier, et par exemple dans une nuance d'acier voisine de celle qui constitue le feuillard.

Dans une forme de réalisation, le profilé comporte au moins un élément polymérique compressible, au moins dans le sens longitudinal de l'enroulement, fixé à l'élément radialement non compressible et s'étendant essentiellement dans le sens longitudinal de l'enroulement par rapport à l'élément radialement non compressible pour conférer au profilé d'entretoise une certaine capacité à l'écrasement dans le sens longitudinal de l'enroulement. Il peut s'agir d'un élément polymérique plein, voire d'une matrice polymérique dans laquelle est noyé l'élément radialement incompressible. Il peut aussi s'agir d'un profilé polymérique creux.

Dans une autre forme de réalisation, l'élément radialement incompressible a une géométrie propre qui lui confère une capacité à la compression dans le sens longitudinal de l'enroulement. Par exemple, il est disposé en faisant des ondulations qui ont une fonction de ressort. En ce cas, il n'est pas nécessaire de prévoir un élément polymérique associé.

Dans une forme préférée de réalisation, les parois opposées d'intrados et d'extrados de l'espace hélicoïdal entre les spires agrafées sont constituées de deux épaisseurs superposées de feuillard, sur au moins la plus grande partie de leur surface.

L'invention permet, notamment dans sa version comportant une partie en polymère, de mieux maîtriser le pas de fabrication, dans la mesure où le profilé d'entretoise inséré dans l'espace entre spires agrafées est conçu pour être en contact avec les parois latérales du feuillard au pas moyen. Lors du cintrage, la matière va dans les vides de l'espace et peut reprendre sa place lors d'un décintrage. On réduit ainsi sensiblement les variations de pas conséquentes aux opérations d'enroulement et de déroulement de la carcasse jusqu'à son gainage.

Un avantage inattendu de l'invention est lié au problème de vibrations constaté sur certaines conduites flexibles montantes (en anglais « flexible risers ») destinées à la production et à l'export d'hydrocarbures gazeux. Ce problème est lié à l'écoulement du gaz dans la conduite "rough bore"et plus précisément aux phénomènes de formation de tourbillons qui apparaissent au contact des déjoints entre les spires de la carcasse. En effet, la discontinuité de surface rencontrée au niveau de ces déjoints entraîne la formation de tourbillons (en anglais"vortex shedding") qui perturbent l'écoulement du gaz dans la conduite. Ces tourbillons induisent des variations de pression cycliques qui peuvent conduire à des problèmes de résonance (vibrations, bruits) dans la conduite et au niveau des équipements et tuyauteries situés sur la plate- forme (ou le FPSO "Floating producing storage and offloading") et généralement appelés "topsides". Ces problèmes peuvent engendrer de nombreux désagréments comme par exemple des fuites dues à la fatigue au niveau des tubulures et équipements connectés aux embouts des conduites. Le document WO 2004/005785 au nom de la Demanderesse fait connaître une solution à ce problème consistant à prévoir des trous dans la carcasse. La présente invention permet elle aussi de résoudre ce problème : en effet, les frottements ajoutés par le profilé d'entretoise et la déformation du profilé d'entretoise augmentent le potentiel de dissipation d'énergie et contribuent à éviter l'apparition des bruits sur la colonne montante.

D'autres caractéristiques et avantages de l'invention apparaîtront à la lecture de la description suivante, en référence aux dessins annexés sur lesquels :
- la figure 1 est une vue en perspective d'une conduite de type "rough bore", à laquelle s'applique l'invention,
- la figure 2 est une vue schématique d'une section longitudinale de carcasse de l'art antérieur, réalisée par enroulement de feuillard en S,
- la figure 3 est une vue schématique agrandie d'une section longitudinale de carcasse au niveau de l'accrochage de deux spires adjacentes, avec son profilé d'entretoise, selon un premier mode de réalisation de l'invention, avec un profil de feuillard en S carré,

- la figure 4 est une vue semblable à la figure 3 pour un deuxième mode de réalisation de l'invention du profilé d'entretoise, avec un profil de feuillard en S arrondi,
- les figures 5, 6 et 7 sont des vues en perspective partielle d'un profilé d'entretoise conforme à des troisième, quatrième et cinquième mode de réalisation de l'invention,
- la figure 8 est une vue du profilé d'entretoise en section transversale, dans un sixième mode de réalisation,
- la figure 9 est une vue analogue aux figures 3 et 4 pour un septième mode de réalisation du profilé d'entretoise conforme à l'invention.

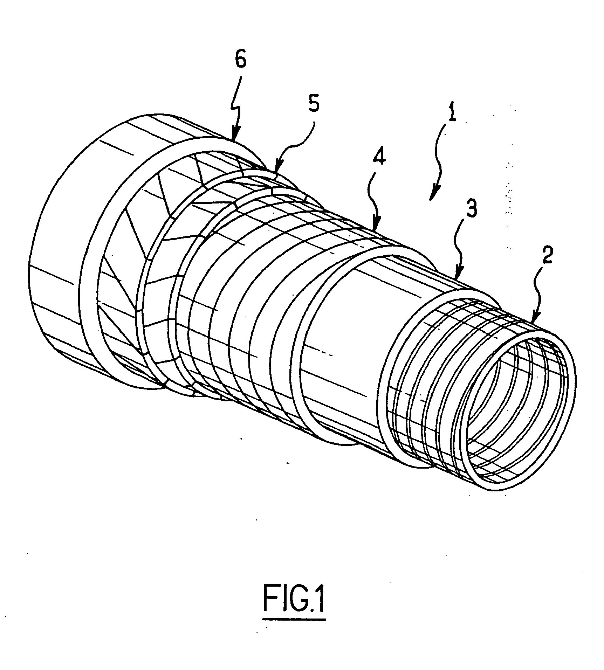

La conduite flexible 1 représentée figure 1 comprend de l'intérieur vers l'extérieur :
- une carcasse 2 constituée d'un enroulement métallique agrafé qui sert à empêcher l'écrasement de la conduite sous la pression externe,
- une gaine étanche de pression interne 3, réalisée en matière plastique généralement polymère, résistant à l'action chimique du fluide à transporter,
- une voûte de pression 4 résistant principalement à la pression développée par le fluide dans la gaine de pression et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I,
- au moins une nappe 5 (et généralement au moins deux nappes croisées) d'armures de traction enroulées à pas long ; l'angle d'armage mesuré sur l'axe longitudinal de la conduite est typiquement compris entre 25° et 55°, et
- une gaine 6 de protection et d'étanchéité externe en polymère.

La voûte de pression 4, destinée essentiellement à résister à la pression interne n'est pas nécessaire dans toutes les situations et, compte tenu du surcoût qu'elle engendre, on préfère utiliser une conduite sans voûte de pression chaque fois que les circonstances le permettent. L'invention s'applique à un cas comme à l'autre.

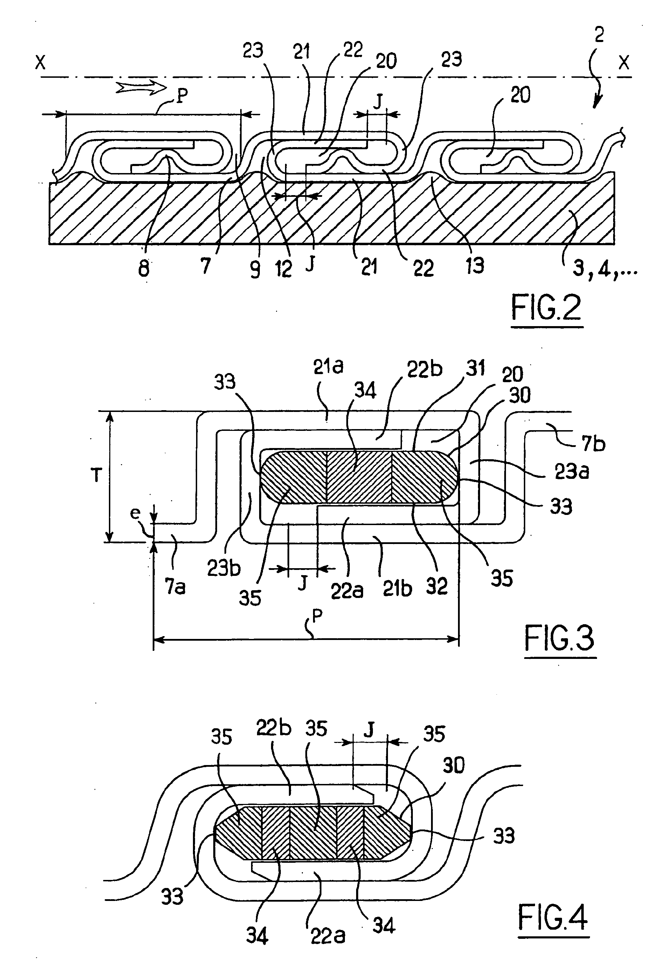

La figure 2 montre la constitution d'une carcasse 2 connue par le document EP 0 429 357, faite de l'enroulement hélicoïdal autour d'un axe XX d'un feuillard 7 formé en S aplati, muni d'une onde d'appui 8. On a représenté les déjoints intérieurs 9 et les déjoints extérieurs 12 qui sont obturés par la couche plastique de la gaine 3 qui entoure la carcasse et flue légèrement dans les déjoints 12 en formant des indentations 13. Le jeu longitudinal entre les spires est autorisé en raison de la distance J laissée entre l'extrémité du retour 22 d'une spire et la jonction entre la branche 21 et la section intermédiaire 23 de la spire adjacente de feuillard 7. Ce jeu longitudinal fait que le pas P entre spires peut varier entre un pas minimal et un pas maximal et qu'on peut définir un pas dit moyen.

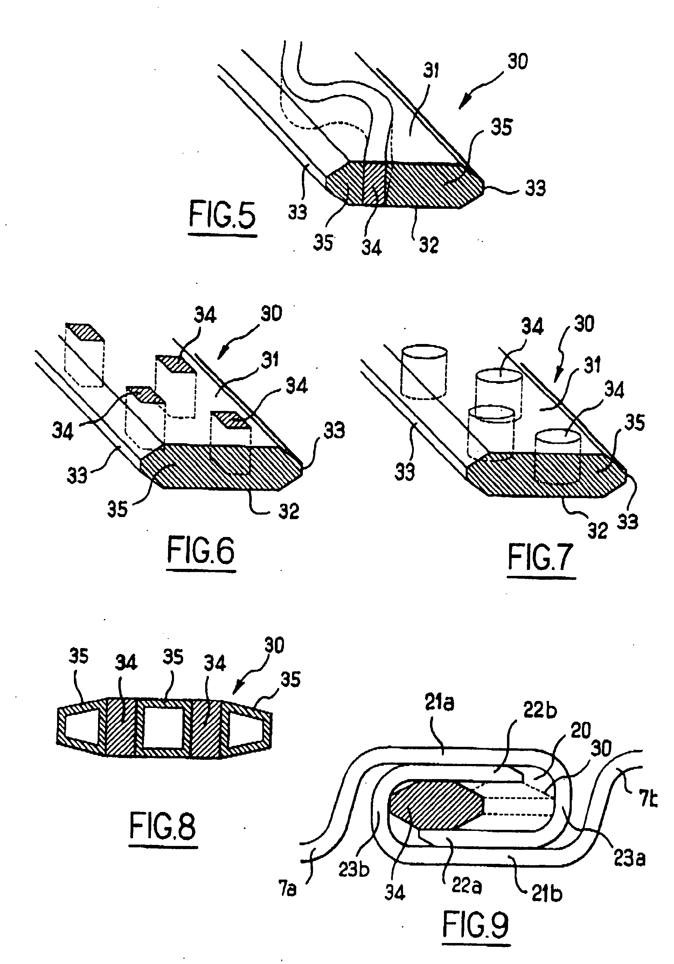

La figure 3 représente plus en détail l'accrochage de deux spires 7a et 7b adjacentes du feuillard 7 en S représentées à leur écartement correspondant au pas moyen. Les deux S des spires 7a, 7b comportent des branches 21a, 21b disposées longitudinalement et des retours 22a, 22b également disposés longitudinalement et séparés des branches 21a, 21b par des tronçons 23a, 23b disposés transversalement. Les deux spires 7a, 7b s'imbriquent en définissant un espace intérieur en caisson hélicoïdal 20 délimité du côté de l'intrados de l'enroulement par deux épaisseurs superposées 21a et 22b de feuillard 7 et du côté de l'extrados par deux épaisseurs superposées 21b et 22a de feuillard 7. Les tronçons 23a, 23b forment les parois latérales de cet espace fermé hélicoïdal 20. Ces parois latérales 23a, 23b peuvent avoir indifféremment une géométrie plane comme représenté à la figure 3 ou arrondie comme représenté aux figures 4 et 9. En effet, la forme des S n'est pas critique et peut être sensiblement carrée comme représenté dans la figure 3 ou arrondie comme représenté aux figures 4 et 9.

L'espace 20 est partiellement occupé par un profilé d'entretoise 30 enroulé hélicoïdalement et disposé de manière à être sensiblement en contact permanent avec les deux parois radialement intérieure 22b et extérieure 22a de l'espace 20, et à être de préférence également en contact permanent avec les deux parois latérales 23a, 23b quand elles sont à leur écartement moyen. À cet effet la section transversale du profilé d'entretoise 30 est donc en rapport avec la section transversale de l'espace 20 et il a généralement même hauteur et même largeur que lui. Le profilé 30 se présente, dans les modes de réalisation des figures 3 à 7, sous forme d'un profilé sensiblement plat enroulable, présentant une grande face d'intrados 31 et une grande face d'extrados 32 et deux petites faces latérales 33 éventuellement arrondies, angulaires, ou chanfreinées.

Le profilé 30 est prévu pour avoir entre sa face d'intrados 31 et sa face d'extrados 32 (c'est-à-dire dans le sens de la hauteur du profilé sur la section transversale) une grande rigidité, obtenue par exemple par la présence d'au moins une section métallique 34 s'étendant sur toute la hauteur du profilé 30 mais pouvant ne s'étendre que sur une partie de sa largeur. Cette section métallique 34 peut être continue sur toute la longueur du profilé 30 (figures 3, 4, 5) ou être discontinue (figures 6 et 7). Elle peut former une section unique (figures 3 et 5) ou former plusieurs sections séparées, par exemple plusieurs sections parallèles continues (figure 4) ou plusieurs plots isolés, de préférence disposés en quinconce, par exemple de base polygonale (figure 6) ou arrondie (figure 7). La section continue 34 peut être droite, par rapport à la direction générale du profilé 30, (figures 3 et 4) ou zigzaguer à l'intérieur de celui-ci (figure 5) ; cette dernière disposition a l'avantage d'élargir la zone d'appui de la partie métallique 34 tout en limitant la quantité d'acier. Dans tous les cas, la section 34 maintient un écartement constant entre les parois d'intrados et d'extrados de l'enroulement de spires 7a, 7b.

Le profilé 30 est prévu pour avoir entre ses faces latérales 33 (dans le sens de la largeur du profilé sur la section transversale) une certaine souplesse élastique, obtenue par exemple par la présence d'au moins une section 35 réalisée dans une matière élastique souple réalisant le reste du profilé 30. De la sorte, entre les faces latérales 33, le profilé 30 peut subir une certaine compression élastique.

Si les parois 23a, 23b des deux spires adjacentes 7a, 7b sont en contact avec les faces latérales 33, elles vont pouvoir, selon les déformations de la conduite, se rapprocher en déformant entre elles les parties élastiquement souples du profilé 30, pour diminuer la distance J. Comme le montre la figure 4, la forme de l'extrémité du retour 22a, 22b de la spire peut être chanfreinée, ce qui modifie légèrement le point de départ du jeu P.

Dans les figures 3 à 7, la section souple 35 est pleine. On peut prévoir, comme représenté à la figure 8, des parties souples 35 creuses, pour augmenter la souplesse de la section 35. Naturellement, comme pour les autres modes de réalisation, l'ensemble reste monobloc, le profilé reste un unique profilé d'entretoise occupant l'espace 20 et assurant à lui seul les deux fonctions de compressibilité différentes dans le sens radial et dans le sens longitudinal.

La ou les parties polymériques 35 sont rendues solidaires de la ou des parties métalliques 34 par collage ou par extrusion avec les parties métalliques préalablement préparées en surface pour l'accrochage du polymère. Elles peuvent aussi être solidarisées à l'aide de moyens d'accrochage mécanique, par exemple du type à queue d'aronde.

La solidarisation des parties polymériques 35 avec les parties métalliques 34, en permettant l'obtention d'un profilé d'entretoise monobloc, a pour effet de faciliter la fabrication de la carcasse. En effet, du fait de l'unicité et du caractère monobloc du profilé d'entretoise, la carcasse peut être fabriquée à partir de seulement deux composants, à savoir d'une part un feuillard et d'autre part un profilé d'entretoise. Ceci permet de fabriquer la carcasse selon la présente invention en réutilisant la plupart des machines de profilage et de spiralage utilisées pour réaliser les carcasses de l'art antérieur (figure 2), les modifications à apporter auxdites machines pour réaliser la carcasse selon la présente invention restant mineures. En effet, la plupart des machines de spiralage sont prévues pour enrouler simultanément deux composants, si bien qu'elles peuvent aisément être adaptées pour fabriquer une carcasse selon la présente invention, l'adaptation se situant uniquement au niveau des trains de galets de profilages et de guidage nécessaires pour guider et/ou profiler les composants jusqu'à leur point d'enroulement. Le train de galets associé au feuillard est un train de profilage tandis que celui associé au profilé d'entretoise est un simple train de guidage.

La partie métallique 34 est de préférence réalisée dans une qualité proche de celle des aciers servant au feuillard (par exemple un acier 316L).

Le polymère de la partie polymérique 35 peut être choisi dans une vaste gamme de produits, en fonction des performances requises et notamment de la compatibilité avec les fluides transportés. De préférence, le polymère a une certaine rigidité à la température ambiante pour maintenir le pas du spiralage et survivre à l'extrusion de la gaine polymérique 3. De préférence aussi, il conserve un comportement hystérétique pendant la vie de la colonne montante dans laquelle ils sont utilisés.

La présence de la partie polymérique 35 peut éventuellement avoir pour effet de rendre la carcasse étanche. Si une telle étanchéité n'est pas souhaitée, le feuillard peut éventuellement être percé, notamment au voisinage des déjoints intérieurs 9 ou extérieurs 12.

La figure 9 montre une variante de réalisation dans laquelle le profilé 30 est réalisé en une seule section métallique 34, à section rectangulaire largement chanfreinée, disposée à l'intérieur de l'espace 20 en zigzag de manière à toucher par les crêtes de ses ondulations tantôt une paroi latérale 33, tantôt l'autre. Donc la section métallique 34 constitue à elle seule le profilé 30 et lui confère la rigidité nécessaire dans le sens de la hauteur, et la souplesse dans le sens de la largeur grâce à l'effet de ressort procuré par les ondulations.

Les figures ont été représentées pour un profilé de feuillard dans lequel le rapport entre l'épaisseur T de la carcasse et l'épaisseur e du feuillard la constituant est de 7, pour un pas moyen P d'environ 17,5 l'épaisseur du feuillard (l'échelle n'est pas respectée sur le dessin dans le sens longitudinal de l'enroulement). Naturellement, les profilés qui utilisent l'invention peuvent varier largement autour de ces valeurs. De préférence cependant, le rapport T/e est compris entre 5 et 10, et avantageusement compris entre 7 et 10 pour permettre le spiralage et le rapport P/T est inférieur à environ 5 pour conserver une bonne performance de résistance à l'effondrement.

## Revendications

1. Conduite tubulaire flexible de transport d'hydrocarbures, notamment gazeux, la conduite étant du type comportant un ensemble de couches non liées dont au moins, de l'intérieur vers l'extérieur, une carcasse, une gaine de pression interne (3) et une ou plusieurs nappes d'armure, la carcasse étant constituée par l'enroulement en spires agrafées d'un feuillard (7) profilé en S, les bords de deux spires adjacentes se chevauchant pour former entre eux un espace fermé hélicoïdal (20) de section sensiblement rectangulaire délimité en direction radiale par des parois opposées d'intrados (22b) et d'extrados (22a) constituées d'au moins une épaisseur de feuillard et en direction longitudinale par deux parois latérales opposées (23a, 23b) constituées d'une épaisseur de feuillard, ledit espace fermé (20) étant occupé au moins partiellement par un profilé d'entretoise monobloc (30) enroulé hélicoïdalement, distinct du feuillard (7) et s'appuyant sur au moins les deux parois opposées d'intrados (22b) et d'extrados (22a), **caractérisée en ce que** ledit profilé d'entretoise (30) présente dans la direction radiale de l'enroulement une capacité à l'écrasement sensiblement nulle et dans la direction longitudinale de l'enroulement une capacité à l'écrasement notable.

2. Conduite selon la revendication 1, **caractérisée en ce que** la dimension hors tout du profilé d'entretoise (30) dans le sens radial est sensiblement égale à l'écartement entre les parois d'intrados (22b) et d'extrados (22a) de l'enroulement.

3. Conduite selon l'une quelconque des revendications 1 ou 2, **caractérisée en ce que** la dimension hors tout du profilé d'entretoise (30) dans le sens longitudinal de l'enroulement est sensiblement égale à l'écartement moyen entre les parois latérales (23a, 23b) des spires lorsqu'elles sont enroulées à leur pas moyen.

4. Conduite selon l'une quelconque des revendications 1 à 3, **caractérisée en ce que** le profilé (30) comporte au moins un élément radialement non compressible (34) formant la hauteur du profilé dans le sens radial de l'enroulement.

5. Conduite selon la revendication 4, **caractérisée en ce que** cet élément non compressible (34) est continu.

6. Conduite selon la revendication 5, **caractérisée en ce que** l'élément non compressible (34) est sous forme d'un élément unique allongé enroulé.

7. Conduite selon la revendication 5, **caractérisée en ce que** l'élément non compressible (34) est sous forme de plusieurs éléments allongés enroulés.

8. Conduite selon la revendication 4, **caractérisée en ce que** cet élément non compressible (34) est discontinu.

9. Conduite selon l'une quelconque des revendications 4 à 8, **caractérisée en ce que** cet élément non compressible (34) est en métal

10. Conduite selon la revendication 9, **caractérisée en ce que** cet élément non compressible (34) est dans une nuance d'acier voisine de celle qui constitue le feuillard (7).

11. Conduite selon l'une quelconque des revendications 4 à 10, **caractérisée en ce que** le profilé d'entretoise (30) comporte au moins un élément polymérique compressible (35), au moins dans le sens longitudinal de l'enroulement, fixé à l'élément radialement non compressible (34).

12. Conduite selon la revendication 11, **caractérisée en ce que** l'élément polymérique (35) s'étend essentiellement dans le sens longitudinal de l'enroulement par rapport à l'élément radialement non compressible (34).

13. Conduite selon l'une quelconque des revendications 11 ou 12, **caractérisée en ce que** l'élément polymérique (35) est plein.

14. Conduite selon l'une quelconque des revendications 11 ou 12, **caractérisée en ce que** l'élément polymérique (35) est une matrice polymérique dans laquelle est noyé l'élément radialement incompressible (34).

15. Conduite selon l'une quelconque des revendications 11 ou 12, **caractérisée en ce que** l'élément polymérique (35) est creux.

16. Conduite selon l'une quelconque des revendications 4 à 10, **caractérisée en ce que** l'élément radialement incompressible (34) a une géométrie propre qui lui confère une capacité à la compression dans le sens longitudinal de l'enroulement.

17. Conduite selon l'une quelconque des revendications 4 à 16, **caractérisée en ce que** l'élément radialement incompressible (34) est disposé en faisant des ondulations.

18. Conduite selon l'une quelconque des revendications 1 à 17, **caractérisée en ce que** les parois opposées d'intrados et d'extrados de l'espace hélicoïdal entre les spires agrafées sont constituées de deux épaisseurs (22b, 21a ; 22a, 21b) superposées de feuillard (7), sur au moins la plus grande partie de leur surface.

## Claims

1. A flexible tubular pipe for transporting hydrocarbons, especially gaseous hydrocarbons, the pipe being of the type comprising a set of unbonded layers including, at least, from the inside outward, a carcass, an internal pressure sheath (3) and one or more armor plies, the carcass being formed by the winding, with interlocked turns, of an S-shaped profiled metal strip (7), the edges of two adjacent turns overlapping to form between them a helicoidal closed space (20) of approximately rectangular cross-section bounded in the radial direction by opposed inner-fiber (22b) and outer-fiber (22a) walls formed from at least one thickness of metal strip and, in the longitudinal direction, by two opposed lateral walls (23a, 23b) formed from a thickness of metal strip, said closed space (20) being at least partially occupied by a one-piece profiled spacer (30) which is wound helically, separate from the metal strip (7), and bears on at least the two opposed inner-fiber (22b) and outer-fiber (22a) walls, **characterized in that** said profiled spacer (30) is almost uncrushable in the radial direction of the winding but substantially crushable in the longitudinal direction of the winding.

2. The pipe as claimed in claim 1, **characterized in that** the overall dimension of the profiled spacer (30) in the radial direction is approximately equal to the spacing between the inner-fiber (22b) and outer-fiber (22a) walls of the winding.

3. The pipe as claimed in either of claims 1 and 2, **characterized in that** the overall dimension of the profiled spacer (30) in the longitudinal direction of the winding is approximately equal to the average spacing between the lateral walls (23a, 23b) of the turns when they are wound with their average pitch.

4. The pipe as claimed in any one of claims 1 to 3, **characterized in that** the profiled spacer (30) includes at least one radially incompressible element (34) forming the height of the spacer in the radial direction of the winding.

5. The pipe as claimed in claim 4, **characterized in that** this incompressible element (34) is continuous.

6. The pipe as claimed in claim 5, **characterized in that** the incompressible element (34) is in the form of a single wound elongate element.

7. The pipe as claimed in claim 5, **characterized in that** the incompressible element (34) is in the form of several wound elongate elements.

8. The pipe as claimed in claim 4, **characterized in that** this incompressible element (34) is discontinuous.

9. The pipe as claimed in any one of claims 4 to 8, **characterized in that** this incompressible element (34) is made of metal.

10. The pipe as claimed in claim 9, **characterized in that** this incompressible element (34) is made of a grade of steel similar to that of which the metal strip (7) is made.

11. The pipe as claimed in any one of claims 4 to 10, **characterized in that** the profiled spacer (30) includes at least one polymeric element (35) which is compressible, at least in the longitudinal direction of the winding, and is fastened to the radially incompressible element (34).

12. The pipe as claimed in claim 11, **characterized in that** the polymeric element (35) extends essentially in the longitudinal direction of the winding relative to the radially incompressible element (34).

13. The pipe as claimed in either of claims 11 and 12, **characterized in that** the polymeric element (35) is a solid element.

14. The pipe as claimed in either of claims 11 and 12, **characterized in that** the polymeric element (35) is a polymeric matrix in which the radially incompressible element (34) is embedded.

15. The pipe as claimed in either of claims 11 and 12, **characterized in that** the polymeric element (35) is hollow.

16. The pipe as claimed in any one of claims 4 to 10, **characterized in that** the radially incompressible element (34) has a geometry suitable for giving it compressibility in the longitudinal direction of the winding.

17. The pipe as claimed in any one of claims 4 to 16, **characterized in that** the radially incompressible element (34) is placed so as to form undulations.

18. The pipe as claimed in any one of claims 1 to 17, **characterized in that** the opposed inner-fiber and outer-fiber walls of the helicoidal space between the interlocked turns consist of two superposed thicknesses (22b, 21a; 22a, 21b) of metal strip (7) over at least most of their surface.

## Patentansprüche

1. Flexible Rohrleitung zum Transport von Kohlenwasserstoffen, insbesondere von gasförmigen Kohlenwasserstoffen, wobei die Rohrleitung des Typs ist, der eine Anordnung von nicht verbundenen Schichten aufweist, darunter zumindest, von innen nach außen, ein Gerippe, einen inneren Druckmantel (3) und eine oder mehrere Zugbewehrungsschichten, wobei das Gerippe durch die Wicklung eines S-förmigen Stahlbands (7) in verklammerten Windungen gebildet ist, wobei sich die Ränder von zwei benachbarten Windungen überlagern, um zwischen einander einen geschlossenen spiralförmigen Raum (20) mit im Wesentlichen rechteckigem Querschnitt zu bilden, der in radialer Richtung durch gegenüberliegende Druckseitenwände (22b) und Saugseitenwände (22a) begrenzt ist, die von mindestens einer Stahlbanddicke gebildet sind, und in Längsrichtung durch zwei gegenüberliegende Seitenwände (23a, 23b) begrenzt ist, die durch eine Stahlbanddicke gebildet sind, wobei der geschlossene Raum (20) zumindest teilweise durch ein einstückiges Stegprofil (30) belegt ist, das spiralförmig gewickelt ist, sich von dem Stahlband (7) unterscheidet und sich auf mindestens den zwei gegenüberliegenden Druckseitenwänden (22b) und Saugseitenwänden (22a) abstützt, **dadurch gekennzeichnet, dass** das Stegprofil (30) in der radialen Richtung der Wicklung ein Stauchvermögen aufweist, das im Wesentlichen gleich Null ist, und in der Längsrichtung der Wicklung ein Stauchvermögen, das erheblich ist.

2. Rohrleitung nach Anspruch 1, **dadurch gekennzeichnet, dass** das Außenmaß des Stegprofils (30) in der radialen Richtung im Wesentlichen gleich dem Abstand zwischen den Druckseitenwänden (22b) und Saugseitenwänden (22a) der Wicklung ist.

3. Rohrleitung nach einem der Ansprüche 1 oder 2, **dadurch gekennzeichnet, dass** das Außenmaß des Stegprofils (30) in der Längsrichtung der Wicklung im Wesentlichen gleich dem gemittelten Abstand zwischen den Seitenwänden (23a, 23b) der Windungen ist, wenn diese in ihrer mittleren Ganghöhe gewickelt sind.

4. Rohrleitung nach einem der Ansprüche 1 bis 3, **dadurch gekennzeichnet, dass** das Profil (30) zumindest ein in radialer Richtung nicht komprimierbares Element (34) aufweist, das die Höhe des Profils in der radialen Richtung der Wicklung bildet.

5. Rohrleitung nach Anspruch 4, **dadurch gekennzeichnet, dass** dieses nicht komprimierbare Element (34) durchgehend ist.

6. Rohrleitung nach Anspruch 5, **dadurch gekennzeichnet, dass** das nicht komprimierbare Element (34) die Form eines einzigen langgezogenen Elements, das gewickelt ist, hat.

7. Rohrleitung nach Anspruch 5, **dadurch gekennzeichnet, dass** das nicht komprimierbare Element (34) die Form von mehreren langgezogenen Elementen, die gewickelt sind, hat.

8. Rohrleitung nach Anspruch 4, **dadurch gekennzeichnet, dass** dieses nicht komprimierbare Element (34) nicht durchgehend ist.

9. Rohrleitung nach einem der Ansprüche 4 bis 8, **dadurch gekennzeichnet, dass** dieses nicht komprimierbare Element (34) aus Metall ist.

10. Rohrleitung nach Anspruch 9, **dadurch gekennzeichnet, dass** dieses nicht komprimierbare Element (34) aus einer Stahlklasse ist, die der ähnlich ist, aus der das Stahlband (7) besteht.

11. Rohrleitung nach einem der Ansprüche 4 bis 10, **dadurch gekennzeichnet, dass** das Stegprofil (30) zumindest ein komprimierbares Polymerelement (35) aufweist, das, zumindest in der Längsrichtung der Wicklung, an dem radial nicht komprimierbaren Element (34) befestigt ist.

12. Rohrleitung nach Anspruch 11, **dadurch gekennzeichnet, dass** das Polymerelement (35) sich im Wesentlichen in der Längsrichtung der Wicklung relativ zu dem radial nicht komprimierbaren Element (34) erstreckt.

13. Rohrleitung nach einem der Ansprüche 11 oder 12, **dadurch gekennzeichnet, dass** das Polymerelement (35) massiv ist.

14. Rohrleitung nach einem der Ansprüche 11 oder 12, **dadurch gekennzeichnet, dass** das Polymerelement (35) eine Polymermatrize ist, in die das radial nicht komprimierbare Element (34) versenkt ist.

15. Rohrleitung nach einem der Ansprüche 11 oder 12, **dadurch gekennzeichnet, dass** das Polymerelement (35) hohl ist.

16. Rohrleitung nach einem der Ansprüche 4 bis 10, **dadurch gekennzeichnet, dass** das radial nicht komprimierbare Element (34) eine eigene Geometrie hat, die ihm ein Kompressionsvermögen in der Längsrichtung der Wicklung verleiht.

17. Rohrleitung nach einem der Ansprüche 4 bis 16, **dadurch gekennzeichnet, dass** das radial nicht komprimierbare Element (34) derart angeordnet ist, dass es Wellen bildet.

18. Rohrleitung nach einem der Ansprüche 1 bis 17, **dadurch gekennzeichnet, dass** die gegenüberliegenden Druckseitenwände und Saugseitenwände des spiralförmigen Raums zwischen den verklammerten Windungen von zwei übereinander angeordneten Dicken (22b, 21a; 22a, 21b) des Stahlbands (7), auf zumindest dem größten Teil ihrer Fläche, gebildet sind.
